# EUROPEAN PATENT APPLICATION

(11) **EP 4 756 885 A1**
(43) Date of publication of application: **10.06.2026**
(21) Application number: 25206941.4
(22) Date of filing: 06.10.2025
(51) Int. Cl.: H01M 4/04, B65H 16/00, H01M 10/04

(54) **SECONDARY BATTERY MANUFACTURING APPARATUS AND METHOD**

(30) Priority: 03.12.2024 KR 20240177497
(71) Applicant: SAMSUNG SDI CO., LTD., Yongin-si, Gyeonggi-do 17084 (KR)
(72) Inventor: CHOI, Kyu Chul, 16678 Suwon-si, Gyeonggi-do (KR)
(74) Representative: Michalski Hüttermann & Partner mbB

(57) **Abstract**

A secondary battery manufacturing apparatus includes a winding part including an unwinder from which an electrode plate may be unwound and a winder on which the electrode plate may be wound. A transfer part includes a roller configured to support the electrode plate as the electrode plate moves from the unwinder to the winder. A processing part includes a first processing part that is disposed in a path along which the electrode plate moves from the unwinder to the winder and disposed at a first surface of the electrode plate, and a second processing part disposed at the second surface of the electrode plate.

## Description

### BACKGROUND

### 1. Field of the Disclosure

The present disclosure relates to a secondary battery manufacturing apparatus and method.

### 2. Discussion of Related Art

Unlike primary batteries that cannot be recharged, secondary batteries are capable of being charged and discharged. Low-capacity secondary batteries are used in small portable electronic devices such as smartphones, feature phones, notebook computers, digital cameras, and camcorders. Large-capacity secondary batteries are widely used as power sources for driving motors of hybrid vehicles, electric vehicles, and the like and as batteries for power storage. A secondary battery includes an electrode assembly including a positive electrode and a negative electrode, a case for accommodating the electrode assembly, an electrode tab connected to the electrode assembly, and the like.

The electrode tab and the electrode assembly are electrically connected, and loss of an active material (mixed part) occurs in a notching process for forming the electrode tab. With the loss of the active material occurs, the capacity of the secondary battery decreases. Therefore, a secondary battery in which loss of an active material is minimized is desired.

The information disclosed in this Background section is provided for enhancement of understanding of the background of the present disclosure. It may contain information that does not constitute related (or prior) art.

### SUMMARY OF THE DISCLOSURE

The present disclosure is directed to providing a secondary battery manufacturing apparatus and method that minimizes loss of an active material.

In addition, the present disclosure is directed to providing a secondary battery manufacturing apparatus and method that are capable of increasing a battery capacity by minimizing loss of an active material.

These and other aspects and features of the present disclosure will be described in or will be apparent from the following description of some embodiments of the present disclosure.

In accordance with one aspect of the present disclosure, there is a provided a secondary battery manufacturing apparatus including a winding part including an unwinder from which an electrode plate may be unwound and a winder on which the electrode plate may be wound, a transfer part including a roller configured to support the electrode plate as the electrode plate moves from the unwinder to the winder, and a processing part including (i) a first processing part that is disposed in a path along which the electrode plate moves from the unwinder to the winder and disposed at a first surface of the electrode plate, and (ii) a second processing part disposed at a second surface of the electrode plate.

The roller may be provided as a provided as a plurality of rollers, and the transfer part further may include a dancer roller part that is disposed between the rollers and is configured to adjust a tensile force applied to the electrode plate.

The dancer roller part may include a dancer roller configured to contact the electrode plate and to increase or decrease the tensile force applied to the electrode plate.

The dancer roller part may further include a dancer cylinder configured to move the dancer roller in a first direction to increase the tensile force applied to the electrode plate and to move the dancer roller in a second direction to decrease the tensile force applied to the electrode plate.

The processing part may include a laser generator configured to generate a laser beam and a path changing part configured to change a path of the laser beam.

The processing part may further include a blower configured to remove foreign matter from the electrode plate.

The first processing part may process the electrode plate or the second processing part may process the electrode plate.

The first processing part and the second processing part may be positioned apart from each other on the path of the electrode plate.

The secondary battery manufacturing apparatus may further include a thickness measurement part configured to measure a thickness of a first active material layer disposed on the first surface and a thickness of a second active material layer disposed on the second surface.

The thickness measurement part may include a cutting part including a cutter configured to cut the first active material layer, the electrode plate, and the second active material layer and a cylinder configured to move the cutter.

The thickness measurement part may further include a measurement part configured to measure the thickness of the first active material layer and the thickness of the second active material layer.

A thickness of a first active material layer disposed the one surface may be different from a thickness of a second active material layer disposed on the other surface.

The first processing part may be configured to process the electrode plate when a thickness of a first active material layer disposed on the first surface is less than a thickness of a second active material layer disposed on the second surface, and the second processing part may be configured to process the electrode plate when the thickness of the first active material layer is greater than the thickness of the second active material layer.

The first processing part or the second processing part may be configured to process the electrode plate when a thickness of a first active material layer disposed on the first surface is the same as a thickness of a second active material layer disposed on the second surface.

In accordance with another aspect of the present disclosure, there is a provided a method of manufacturing a secondary battery, which includes a thickness measurement operation of measuring a thickness of a first active material layer disposed on a first surface of an electrode plate and a thickness of a second active material layer disposed on a second surface of the electrode plate, a thickness comparison operation of comparing the thickness of the first active material layer to the thickness of the second active material layer, and an electrode plate processing operation of processing the electrode plate by a first processing part disposed at the first surface or processing the electrode plate by a second processing part disposed at the second surface.

In the electrode plate processing operation, the first processing part may process the electrode plate when the thickness of the first active material layer is less than the thickness of the second active material layer, and the second processing part may process the electrode plate when the thickness of the first active material layer is greater than the thickness of the second active material layer.

A blower may remove foreign matter on the electrode plate in the electrode plate processing operation.

The method of manufacturing a secondary battery may further include a cutting operation of cutting the electrode plate, the first active material layer, and the second active material layer before the thickness measurement operation is performed.

In the cutting operation, a cutter moves to cut the electrode plate, the first active material layer, and the second active material layer.

In the thickness comparison operation, a measurement part may measure a thickness of the cut first active material layer and a thickness of the cut second active material layer.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not limited to the drawings:
FIG. 1 is a schematic view of a secondary battery manufacturing apparatus according to an embodiment of the present disclosure;
FIG. 2 is a perspective view of a cutting part of a thickness measurement part according to an embodiment of the present disclosure;
FIG. 3 is a perspective view of a measurement part of the thickness measurement part according to an embodiment of the present disclosure;
FIG. 4 is a cross-sectional view of a cut electrode plate according to an embodiment of the present disclosure;
FIG. 5 is a cross-sectional view of an electrode plate on which a thin active material layer is processed according to an embodiment of the present disclosure;
FIG. 6 is a cross-sectional view of an electrode plate on which a thick active material layer is processed according to an embodiment of the present disclosure;
FIG. 7 is a schematic view of a first processing part according to an embodiment of the present disclosure;
FIG. 8 is a schematic of a second processing part according to an embodiment of the disclosure; and
FIG. 9 is a flowchart of a method of manufacturing a secondary battery according to an embodiment of the present disclosure.

### DETAILED DESCRIPTION OF EXEMPLARY EMBODIMENTS

Herein, embodiments of the present disclosure will be described in detail with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same. Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

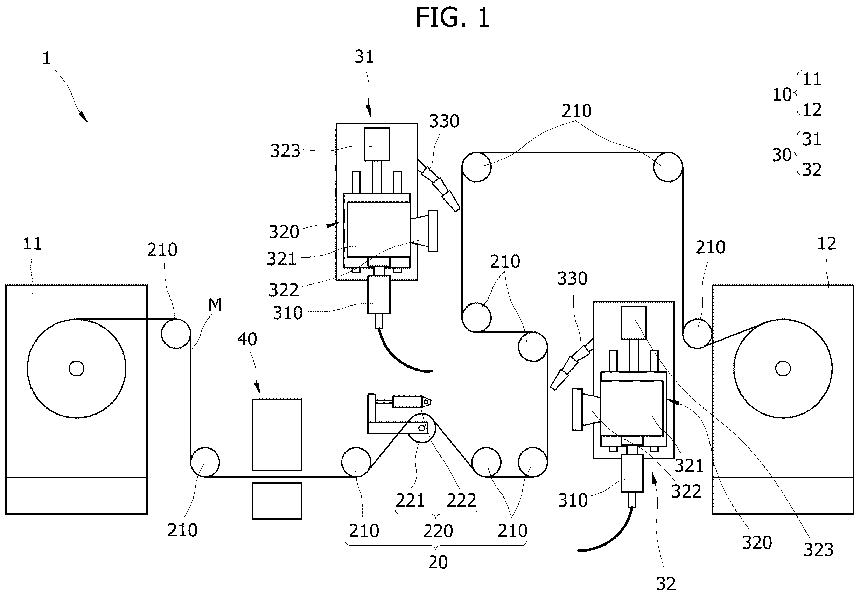

FIG. 1 is a schematic view of a secondary battery manufacturing apparatus according to an embodiment of the present disclosure. The secondary battery manufacturing apparatus 1 will be briefly described with reference to FIG. 1.

The secondary battery manufacturing apparatus 1 may include a winding part 10, a transfer part 20, a processing part 30, and a thickness measurement part 40.

In the apparatus 1, an electrode plate M wound on an unwinder 11 of the winding part 10 may be unwound, moved by the transfer part 20, and wound on a winder 12. The electrode plate M transferred by the transfer part 20 may be processed by the processing part 30. According to an embodiment, the electrode plate M may be notched by the processing part 30. The processing part 30 may include a first processing part 31 and a second processing part 32.

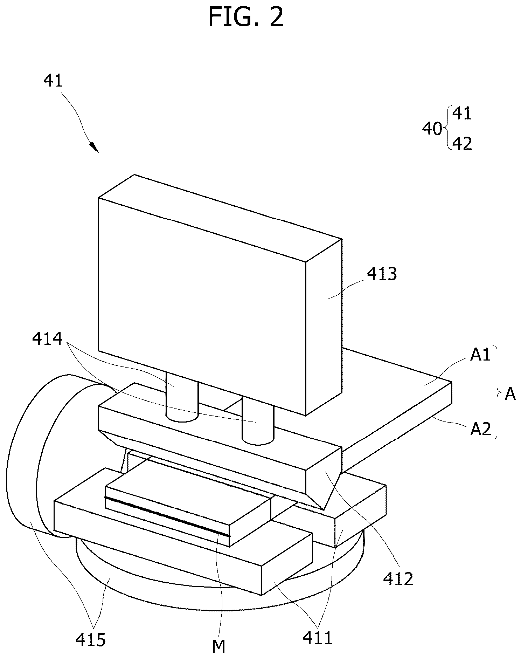

The electrode plate M may be provided in a plate shape and may include first and second surfaces. An active material (for example, an active material A as shown in FIG. 2) may be disposed on the first and second surfaces of the electrode plate M. The first processing part 31 may be disposed at the first surface of the electrode plate M, and the second processing part 32 may be disposed at the second surface of the electrode plate M. The electrode plate M may be processed by the first processing part 31 and/or the second processing part 32. The electrode plate M notched by the processing part 30 may be used in a jelly roll type or stack type electrode assembly.

The processing part 30 may notch the electrode plate M and the active material A. In particular, the first processing part 31 may be disposed at the first surface of the electrode plate M and may notch the electrode plate M, and the second processing part 32 may be disposed at the second surface of the electrode plate M and may notch electrode plate M.

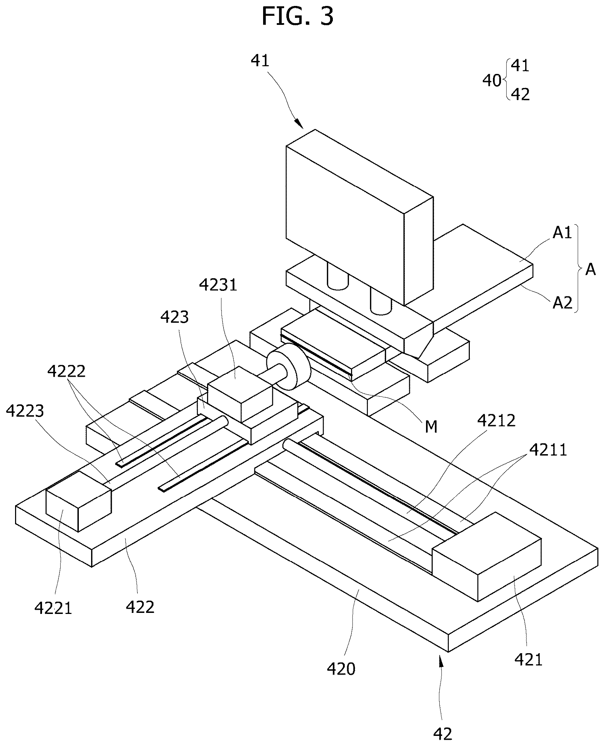

The thickness measurement part 40 may include a cutting part 41 and a measurement part 42 (see FIGs. 2 and 3). The cutting part 41 may cut the electrode plate M. The measurement part 42 may measure a thickness of a first active material layer (for example, a first active material layer A1 of FIG. 2) disposed on the first surface of the cut electrode plate M and a thickness of a second active material layer (for example, a second active material layer A2 of FIG. 2) disposed on the second surface of the cut electrode plate M.

The processing part 30 may notch the thinner of the first active material layer A1 and the second active material layer A2.

According to an embodiment, when the thickness of the first active material layer A1 is less than the thickness of the second active material layer A2, the first processing part 31 disposed at the first active material layer A1 may notch the first active material layer A1, the electrode plate M, and the second active material layer A2. According to another embodiment, when the thickness of the first active material layer A1 is greater than the thickness of the second active material layer A2, the second processing part 32 disposed at the second active material layer A2 may notch the second active material layer A2, the electrode plate M, and the first active material layer A1.

As described above, as the secondary battery manufacturing apparatus 1 includes the first processing part 31 and the second processing part 32 and notches the thinner active material A between the first active material layer A1 and the second active material layer A2, an amount of the active material A lost when the notching is performed may decrease. Accordingly, the loss of the active material A can be minimized, and a battery capacity of a manufactured secondary battery can be increased.

Hereinafter, details of the secondary battery manufacturing apparatus 1 will be described with reference to FIG. 1.

The winding part 10 may include the unwinder 11 and the winder 12. The electrode plate M may be unwound by the unwinder 11, and the electrode plate M may be wound by the winder 12. The electrode plate M unwound from the unwinder 11 may be moved along a set path towards the winder 12.

The electrode plate M may include a metal. According to an embodiment, the electrode plate M may be formed in the shape of a foil including a metal material such as aluminum, an aluminum alloy, copper, a copper alloy, nickel, or a nickel alloy.

The transfer part 20 may include a roller 210 and a dancer roller part 220. The roller 210 may be disposed on the first surface and/or the second surface of the electrode plate M. The roller 210 may be in contact with the electrode plate M, may support the electrode plate M, and may change a movement direction of the electrode plate M. In some embodiments, the roller 210 may be provided as a plurality of rollers 210. The path along which the electrode plate M moves may be defined by the plurality of rollers 210.

The electrode plate M may be moved by the rollers 210 along any of various paths. According to an embodiment, the electrode plate M may be in contact with the rollers 210 and may be moved along any of various paths that are formed in different shapes such as "L," "U," "Z," "S," "N," "V," and "M" shapes.

The dancer roller part 220 may be disposed on the path along which the electrode plate M moves. The dancer roller part 220 may be in contact with the electrode plate M to adjust a tensile force applied to the electrode plate M.

According to an embodiment, the dancer roller part 220 may be disposed between the unwinder 11 and the roller 210, between the rollers 210, or between the roller 210 and the winder 12.

The dancer roller part 220 may include a dancer roller 221 and a dancer cylinder 222. The dancer roller 221 may be in contact with the electrode plate M and move the electrode plate M in one direction. In particular, the dancer roller 221 may move in a direction to increase the tensile force applied to the electrode plate M. On the other hand, the dancer roller 221 may move in the other direction to decrease the tensile force applied to the electrode plate M.

As the tensile force applied to the electrode plate M is adjusted by the movement of the dancer roller 221 even when the unwinder 11 and the winder 12 are not rotated in close precision with one another. Thus, the quality of the electrode plate M made by the secondary battery manufacturing apparatus 1 can be uniform. In addition, even when a diameter of the electrode plate M wound on the unwinder 11 decreases, and a diameter of the electrode plate M wound on the winder 12 increases, the tensile force applied to the electrode plate M may be adjusted by the movement of the dancer roller 221.

The dancer cylinder 222 may move the dancer roller 221. As the dancer cylinder 222 moves the dancer roller 221, the tensile force applied to the electrode plate M may be adjusted by the dancer roller 221.

The processing part 30 may be provided as a plurality of processing parts 30. According to an embodiment, the processing parts 30 may include a first processing part 31 and a second processing part 32. The processing parts 30 may notch the electrode plate M and the active material A disposed on the electrode plate M. As the processing part 30 notches the electrode plate M and the active material A, a tab may be formed on the electrode plate M.

The electrode plate M may be provided in a plate or strap shape. But the shape of the electrode plate M is not limited to a plate or strap and may be any of various shapes. The active material A may be provided on both surfaces of the electrode plate M.

According to an embodiment, the first active material layer (for example, the first active material layer A1 of FIG. 2) may be disposed on a first surface of the electrode plate M, and the second active material layer (for example, the second active material layer A2 of FIG. 2) may be disposed on a second surface of the electrode plate M.

According to an embodiment, the first processing part 31 may be disposed at the first surface of the electrode plate M on which the first active material layer A1 is disposed, and the second processing part 32 may be disposed at the second surface of the electrode plate M on which the second active material layer A2 is disposed. Accordingly, the electrode plate M and the active material A may be notched by the first processing part 31 disposed at the first surface of the electrode plate M or notched by the second processing part 32 disposed at the second surface of the electrode plate M.

The processing part 30 may include a laser generator 310, a path changing part 320, and a blower 330.

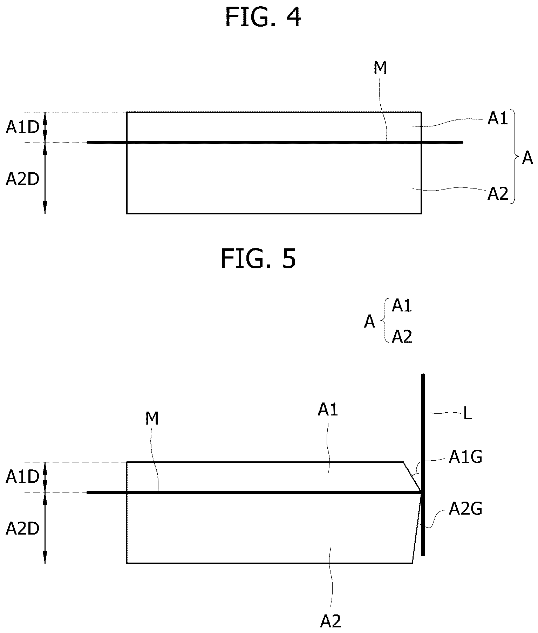

The laser generator 310 may generate a laser (for example, a laser L shown in FIG. 5) for notching the electrode plate M and the active material A. The laser L generated in the laser generator 310 may be directed to the scanner 321. The scanner 321 may change the direction of the laser L. According to an embodiment, the scanner 321 may reflect and/or refract the laser L to change the proceeding direction of the laser L. Accordingly, the laser L may be directed toward the electrode plate M and/or the active material A. By the direction of the scanner 321, the laser L may be directed toward the lens 322.

The scanner 321 may move fast to quickly change the direction of the laser L. Accordingly, a desired shape may be formed by notching the electrode plate M and/or the active material A.

The lens 322 may reflect and/or or refract the laser L to change the its direction. According to an embodiment, the lens 322 may collect the laser L. As the laser L is collected by the lens 322, a width of the laser L may be decreased, and a focal point at which the laser L is collected may be decreased. Accordingly, energy per area transmitted from a region from which the laser L is emitted may increase. Thus, the electrode plate M and/or the active material A may be precisely notched by the laser L.

A laser position adjuster 323 may adjust positions of the laser generator 310 and/or the path changing part 320 to adjust a focal distance for the laser L.

The blower 330 may remove foreign matter on the electrode plate M and/or the active material A to which the laser L is emitted. More specifically, the blower 330 may remove the foreign matter on the electrode plate M and/or the active material A by suctioning or discharging air. As the blower 330 removes the foreign matter, a defect rate of the secondary battery manufactured by the secondary battery manufacturing apparatus 1 is decreased, and a battery capacity of the secondary battery is increased.

The thickness measurement part 40 may cut the electrode plate M and/or the active material A and measure a thickness of the active material A disposed on the electrode plate M. According to an embodiment, the cutting part 41 cuts the electrode plate M and/or the active material A and the measurement part 42 measures the thickness of the active material A that is disposed on both surfaces of the electrode plate M. In some embodiments, the measurement part 42 measures the thickness of the first active material layer A1 disposed on the first surface of the electrode plate M and the thickness of the second active material layer A2 disposed on the second surface of the electrode plate M.

The thickness measurement part 40 will be described with reference to FIGS. 2 and 3 below.

FIG. 2 is a perspective view of the cutting part of the thickness measurement part according to an embodiment of the present disclosure, and FIG. 3 is a perspective view of the measurement part of the thickness measurement part according to an embodiment of the present disclosure.

The thickness measurement part 40 may cut the electrode plate M and the active material A and measure a thickness of the electrode plate M and the active material A. The thickness measurement part 40 may include the cutting part 41 and the measurement part 42.

The cutting part 41 may cut the electrode plate M and the active material A. The cutting part 41 may include a lower support 411, a cutter 412, a cutter support 413, a cylinder 414, and a foreign matter remover 415.

The lower support 411 may support the electrode plate M and the active material A. The active material A may be disposed on both surfaces of the electrode plate M. According to an embodiment, the first active material layer A1 may be disposed on the first surface of the electrode plate M, and the second active material layer A2 may be disposed on the second surface of the electrode plate M.

The electrode plate M and the active material A may be supported by the lower support 411. According to an embodiment, the electrode plate M and the active material A may be disposed on the lower support 411. More specifically, the electrode plate M may be supported by the lower support 411 and moved in a direction such as a longitudinal direction of the electrode plate M.

The lower support 411 may be provided as a plurality of lower supports 411. The lower supports 411 may be disposed apart from each other. The cutter 412 may move between the lower supports 411 that are spaced apart from each other.

The cutter 412 may cut the electrode plate M and the active material A. The cutter 412 may be provided as a blade, saw, or the like. But the cutter 412 is not limited to a blade or saw and may be provided as other devices that are capable of cutting the electrode plate M and/or the active material A.

The cutter support 413 may be disposed above the cutter 412. The cutter support 413 and the cutter 412 may be connected through the cylinder 414such that a distance between the cutter 412 and the cutter support 413 may be changed by the cylinder 414. And as the distance between the cutter 412 and the cutter support 413 decreases or increases, the electrode plate M and/or the active material A may be cut.

The foreign matter remover 415 may be disposed adjacent to the lower support 411. According to an embodiment, the foreign matter remover 415 may be disposed below or beside the lower support 411. The foreign matter remover 415 may remove the foreign matter separated from the electrode plate M and/or the active material A cut by the cutting part 41 by suctioning or discharging air. Thus, a defect rate of the secondary battery manufactured by the secondary battery manufacturing apparatus 1 can be decreased, and a battery capacity can be increased.

The measurement part 42 may include a measurement support 420, a position controller 421, a position control rail 4211, a position adjustment rod 4212, a focus adjustment support 422, a focuser 4221, a focus control rail 4222, a focus adjustment rod 4223, an image capturing support 423, and an image capturing device 4231.

The measurement support 420 may be provided in a plate shape. But the shape of the measurement support 420 is not limited to the plate shape and may be any of various shapes.

The position controller 421 may be disposed on the measurement support 420. In particular, the position controller 421 may be fixed to the measurement support 420, and a distance between the position controller 421 and the focus adjustment support 422 may be changed by driving of the position controller 421. The position control rail 4211 and the position adjustment rod 4212 may be disposed on the measurement support 420. As the focus adjustment support 422 is disposed on the position control rail 4211, the focus adjustment support 422 may move in a longitudinal direction of the position control rail 4211.

The position adjustment rod 4212 may connect the position controller 421 and the focus adjustment support 422. The position adjustment rod 4212 may be driven (e.g., rotated) by the driving of the position controller 421 to move the focus adjustment support 422.

The focus adjustment support 422 may be provided in a plate shape. But the shape of the focus adjustment support 422 is not limited to the plate shape and may be any of various shapes.

The focuser 4221 may be disposed on the focus adjustment support 422. In particular, the focuser 4221 may be fixed to the focus adjustment support 422, and a distance between the focuser 4221 and the image capturing support 423 may be changed by driving of the focuser 4221.

The focus control rail 4222 and the focus adjustment rod 4223 may be disposed on the focus adjustment support 422. As the image capturing support 423 is disposed on the focus control rail 4222, the image capturing support 423 may move in a longitudinal direction of the focus control rail 4222. The focus adjustment rod 4223 may connect the focuser 4221 and the image capturing support 423. The focus adjustment rod 4223 may be driven (e.g., rotated) by the driving of the focuser 4221 to move the image capturing support 423.

The image capturing support 423 may be provided in a plate shape. But the shape of the image capturing support 423 is not limited to the plate shape and may be any of various shapes.

The image capturing support 423 may move in the longitudinal direction of the focus control rail 4222, and the distance between the image capturing support 423 and the focuser 4221 may be changed by the focus adjustment rod 4223.

The image capturing device 4231 may be disposed on the image capturing support 423. The image capturing 4231 may capture an image of a cross section of the cut electrode plate M and/or active material A to measure the thickness of the electrode plate M and/or the active material A. The image capturing device 4231 may be provided as any of various components such as an electron microscope, an optical microscope, and/or a camera. But the image capturing device 4231 is not limited to the electron microscope, the optical microscope, the camera, or the like and may be provided as any of various devices capable of measuring the thickness of the electrode plate M and/or the active material A.

A distance between the image capturing device 4231 and the electrode plate M may be adjusted. In particular, the distance between the image capturing device 4231 and the electrode plate M may be adjusted by the focuser 4221. Accordingly, a focal point of the image capturing device 4231 may be adjusted.

The position controller 421 may be driven to move the focus adjustment support 422. The distance between the position controller 421 and the focus adjustment support 422 may be adjusted by the driving of the position controller 421.

When the thickness of the electrode plate M and/or the active material A is completely measured, the focus adjustment support 422 may be spaced apart from the path of the electrode plate M.

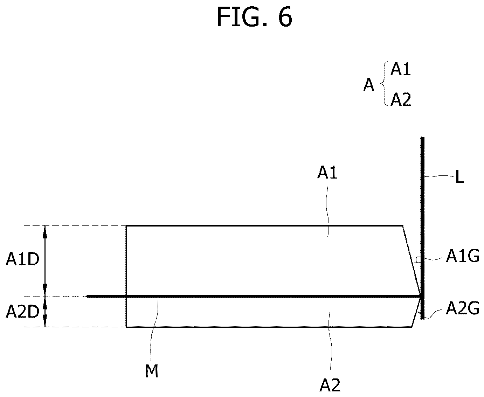

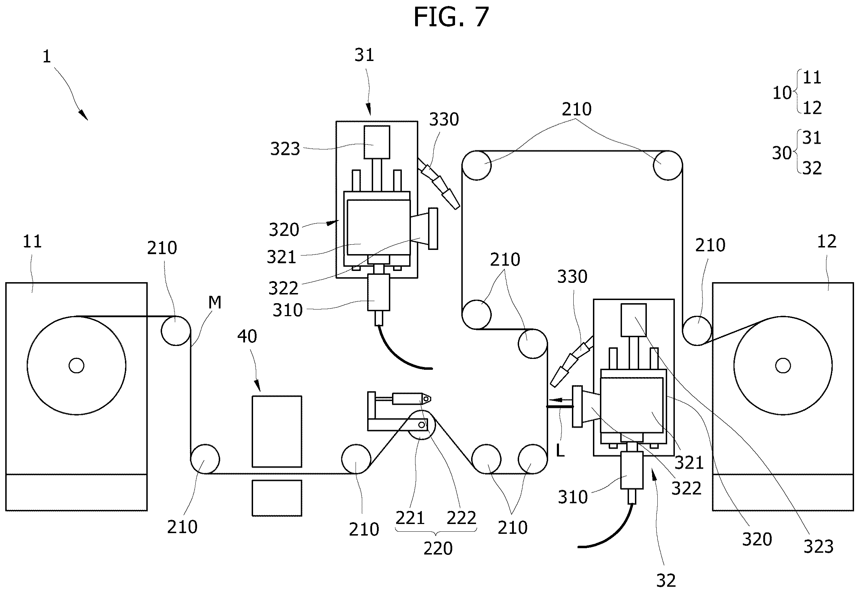

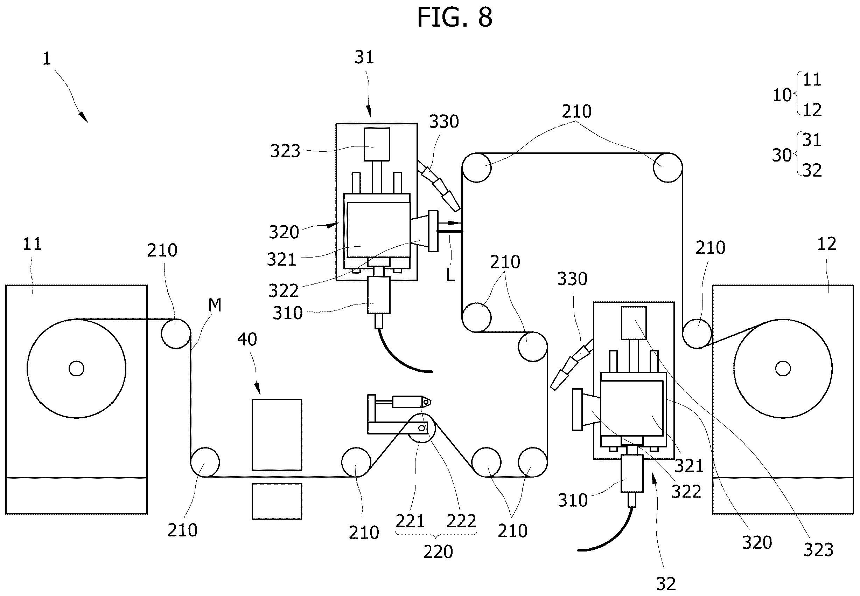

FIG. 4 is a cross-sectional view of a cut electrode plate according to an embodiment of the present disclosure, and FIG. 5 is a cross-sectional view of a electrode plate on which the thin active material layer is processed according to an embodiment of the present disclosure. FIG. 6 is a cross-sectional view of an electrode plate on which a thick active material layer is processed according to an embodiment of the present disclosure, and FIG. 7 is a schematic view iof a first processing part according to an embodiment of the present disclosure that processes the electrode plate. FIG. 8 is a schematic view of a second processing part according to an embodiment of the present disclosure that processes the electrode plate.

The electrode plate M and the active material A will be described with reference to FIGS. 4 to 6.

The active material A may be disposed on the electrode plate M. According to an embodiment, the active material A may be disposed on both surfaces of the electrode plate M. More specifically, the first active material layer A1 may be disposed on a first surface of the electrode plate M, and the second active material layer A2 may be disposed on a second surface of the electrode plate M.

The thickness of the first active material layer A1 may be defined as a first active material layer thickness A1D, and the thickness of the second active material layer A2 may be defined as a second active material layer thickness A2D. Although the first active material layer thickness A1D and the second active material layer thickness A2D may be the same, the first active material layer thickness A1D and the second active material layer thickness A2D may not be the same in a manufacturing process (see FIG. 4). In the example depicted in FIG. 5, the first active material layer thickness A1D is less than the second active material layer thickness A2D. In the example depicted in FIG. 6, the first active material layer thickness A1D is greater than the second active material layer thickness A2D.

In FIGS. 5 and 6, the laser L proceeds from the first active material layer A1 toward the second active material layer A2. But then emission direction of the laser L is not limited the direction illustrated in FIGS. 5 and 6, and the laser L may proceed from the second active material layer A2 toward the first active material layer A1.

In FIG. 5, the laser L is emitted from a side of the first surface of the electrode plate M on which the first active material layer A1 having the first active material layer thickness A1D, which is less than the second active material layer thickness A2D, is disposed. In FIG. 6, the laser L is emitted from a side of the second surface of the electrode plate M on which the first active material layer A1 having the first active material layer thickness A1D, which is greater than the second active material layer thickness A2D, is disposed.

When the first active material layer thickness A1D is less than the second active material layer thickness A2D, and the laser L is emitted to the first active material layer A1, a part of the first active material layer A1, the second active material layer A2, and the electrode plate M may be removed. In particular, portions of the first active material layer A1 and the second active material layer A2 that are close to the laser L may be removed due to the increased temperature caused by the laser L.

An angle formed by the direction of the laser L and a surface of the first active material layer A1 may be defined as a first active material layer cutting angle A1G. An angle formed by the direction of the laser L and a surface of the second active material layer A2 may be defined as a second active material layer cutting angle A2G.

When the laser L is emitted in the direction in which the laser L proceeds from the first active material layer A1 toward the second active material layer A2, the first active material layer cutting angle A1G may be greater than the second active material layer cutting angle A2G. When the laser L is emitted in the direction in which the laser L proceeds from the second active material layer A2 toward the first active material layer A1, the first active material layer cutting angle A1G may be less than the second active material layer cutting angle A2G. Thus, a cutting angle formed in the active material A that is closer to the side from which the laser L is emitted may be larger. And as the cutting angle is larger, an amount of the active material A removed by the laser L may increase.

Referring again to FIGS. 5 and 6, the amount of the active material A removed in FIG. 5 is less than the amount of the active material A removed in FIG. 6. Accordingly, a device according to embodiments of the present disclosure may be configured such that the laser L is first directed to a thinner one of the first active material layer thickness A1D and the second active material layer thickness A2D to minimize an amount of the active material A removed by the laser L.

The thickness measurement part 40 may measure the first active material layer thickness A1D and the second active material layer thickness A2D and compare the first active material layer thickness A1D with the second active material layer thickness A2D. When the first active material layer thickness A1D is greater than the second active material layer thickness A2D, the second processing part 32 disposed closer to the second active material layer A2 than to the first active material layer A1 based on the electrode plate M may be used to notch the electrode plate M and the active material A. Accordingly, the laser L emitted from the second processing part 32 may sequentially notch the second active material layer A2, then the electrode plate M, and then the first active material layer A1 (see FIG. 7).

When the first active material layer thickness A1D is less than the second active material layer thickness A2D, the first processing part 31 disposed closer to the first active material layer A1 than to the second active material layer A2 based on the electrode plate M may be used to notch the electrode plate M and the active material A. Accordingly, the laser L emitted from the first processing part 31 may sequentially notch the first active material layer A1, then the electrode plate M, and then the second active material layer A2 (see FIG. 8). Thus, when the first active material layer thickness A1D is less than the second active material layer thickness A2D, the first processing part 31 may process the first active material layer A1, the electrode plate M, and the second active material layer A2. But when the first active material layer thickness A1D is greater than the second active material layer thickness A2D, the second processing part 32 may process the second active material layer A2, the electrode plate M, and the first active material layer. and when the first active material layer thickness A1D and the second active material layer thickness A2D are the same, either of the first processing part 31 and the second processing part 32 may notch the electrode plate M and the active material A.

According to an embodiment of the present disclosure, the first processing part 31 and the second processing part 32 are disposed at the same position on the path of the electrode plate M. According to another embodiment of the present disclosure, the first processing part 31 and the second processing part 32 are disposed at different positions on the path of the electrode plate M.

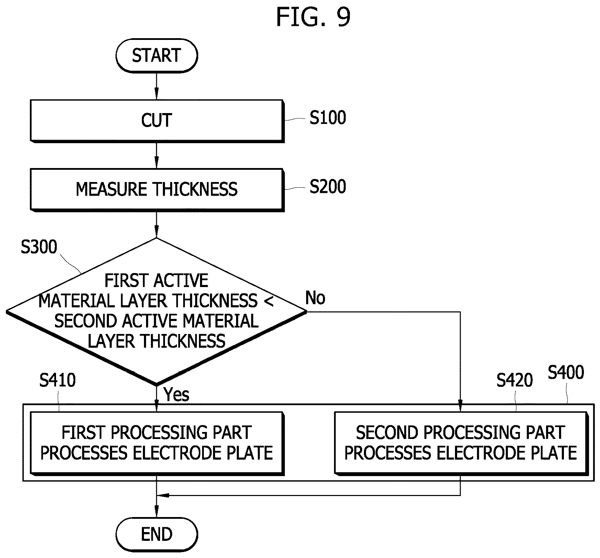

FIG. 9 is a flowchart of a method of manufacturing a secondary battery according to an embodiment of the present disclosure.

The method of manufacturing a secondary battery may include a thickness measurement operation S200 of measuring the first active material layer thickness A1D on the first surface of the electrode plate M and the second active material layer thickness A2D on the second surface of the electrode plate M. The method may further include a thickness comparison operation S300 of comparing the first active material layer thickness A1D with the second active material layer thickness A2D. The method may also include an electrode plate processing operation S400 of FIG. 9 of processing, by the first processing part 31 disposed at the one surface of the electrode plate M, the electrode plate M and the active material A, or processing, by the second processing part 32 disposed at the other surface of the electrode plate M, the electrode plate M and the active material A.

The method of manufacturing a secondary battery may further include a cutting operation S100 of cutting the electrode plate M, the first active material layer A1, and the second active material layer A2 before the thickness measurement operation S200 is performed. In the cutting operation S100, the electrode plate M, the first active material layer A1, and the second active material layer A2 may be cut by the thickness measurement part 40. According to an embodiment, the electrode plate M, the first active material layer A1, and the second active material layer A2 may be cut by the cutting part 41 of the thickness measurement part 40. The first active material layer A1, the electrode plate M, and the second active material layer A2 may be cut by the cutting part 41 in the order of the first active material layer A1, the electrode plate M, and the second active material layer A2, or cut in the order of the second active material layer A2, the electrode plate M, and the first active material layer A1. The electrode plate M, the first active material layer A1, and the second active material layer A2 may be cut by the cutter 412 of the cutting part 41. The cutter 412 may move to cut the electrode plate M and the active material A.

The thickness measurement part 40 used in the cutting operation S100 is the same as the thickness measurement part 40 illustrated in FIGS. 1 to 3. In the thickness measurement operation S200, a thickness of the electrode plate M, a thickness of the first active material layer A1, and a thickness of the second active material layer A2 may be measured by the thickness measurement part 40. That is, the thickness of the electrode plate M and a thickness of the active material A that are cut by the cutting part 41 may be measured by the measurement part 42. More specifically, the measurement part 42 may measure the first active material layer thickness A1D and the second active material layer thickness A2D. The thickness measurement part 40 used in the thickness measurement operation S200 is the same as the thickness measurement part 40 illustrated in FIGS. 1 to 3.

In the thickness comparison operation S300, the first active material layer thickness A1D may be compared with the second active material layer thickness A2D. After the first active material layer thickness A1D is compared with the second active material layer thickness A2D, the processing part 30 may be used to process the electrode plate M (S400). The thickness measurement part 40 used in the thickness comparison operation S300 is the same as the thickness measurement part 40 illustrated in FIGS. 1 to 3.

In the electrode plate processing operation S400, when the first active material layer thickness A1D is less than the second active material layer thickness A2D ("Yes" in S300), the first processing part 31 may be used to process the electrode plate M (S410). As the first processing part 31 is used to sequentially process the first active material layer A1, the electrode plate M, and the second active material layer A2, the amount of removed active material A is minimized.

In the electrode plate processing operation S400, when the first active material layer thickness A1D is greater than the second active material layer thickness A2D ("No" in S300), the second processing part 32 may be used to process the electrode plate M (S420). As the second processing part 32 is used to sequentially process the second active material layer A2, the electrode plate M, and the first active material layer A1, the amount of removed active material A is minimized.

As described above, as an amount of the active material A removed from the electrode plate M is minimized, battery capacity can be increased.

In the electrode plate processing operation S400, the blower 330 may remove foreign matter on the electrode plate M. According to embodiments, the blower 330 may remove the foreign matter on the electrode plate M by suctioning or discharging air.

The processing part 30 used in the electrode plate processing operation S400 is the same as the processing part 30 illustrated in FIGS. 1 to 8.

The method of manufacturing a secondary battery may include an unwinding operation of unwinding the wound electrode plate M by the unwinder 11 and a winding operation of winding the electrode plate M processed by the processing part 30 by the winder 12.

The method of manufacturing a secondary battery may include a transfer operation of transferring the electrode plate M along the path formed from the unwinder 11 to the winder 12 by using by the plurality of rollers in contact with the electrode plate M.

Loss of an active material can be minimized using the secondary battery manufacturing apparatus and method according to the present disclosure. And the capacity of a secondary battery can be increased using the secondary battery manufacturing apparatus and method according to the present disclosure.

However, the effects obtainable through the present disclosure are not limited to the above effects, and other technical effects that are not mentioned will be clearly understood by those skilled in the art.

While the present disclosure has been described with reference to embodiments shown in the drawings, these embodiments are merely illustrative and modifications and equivalent other embodiments can be derived by those skilled in the art on the basis of the embodiments.

## Claims

1. A secondary battery manufacturing apparatus (1) comprising:
a winding part (10) including an unwinder (11) from which an electrode plate (M) may be unwound and a winder (12) on which the electrode plate (M) may be wound;
a transfer part (20) including a roller (210) configured to support the electrode plate (M) as the electrode plate (M) moves from the unwinder (11) to the winder (12); and
a processing part (30) including (i) a first processing part (31) that is disposed in a path along which the electrode plate (M) moves from the unwinder (11) to the winder (12) and disposed at a first surface of the electrode plate (M), and (ii) a second processing part (32) disposed at a second surface of the electrode plate (M).

2. The secondary battery manufacturing apparatus (1) as claimed in claim 1, wherein the roller (210) is provided as a plurality of rollers, and the transfer part (20) further includes a dancer roller part (220) that is disposed between the rollers (210) and is configured to adjust a tensile force applied to the electrode plate (M).

3. The secondary battery manufacturing apparatus (1) as claimed in claim 2, wherein the dancer roller part (220) includes a dancer roller (221) configured to contact the electrode plate (M) and to increase or decrease the tensile force applied to the electrode plate (M).

4. The secondary battery manufacturing apparatus (1) as claimed in claim 3, wherein the dancer roller part (220) further includes a dancer cylinder (222) configured to move the dancer roller (221) in a first direction to increase the tensile force applied to the electrode plate (M) and to move the dancer roller (221) in a second direction to decrease the tensile force applied to the electrode plate (M).

5. The secondary battery manufacturing apparatus (1) as claimed in any of the previous claims, wherein the processing part (30) comprises:
a laser generator (310) configured to generate a laser beam (L); and
a path changing part (320) configured to change a path of the laser beam (L).

6. The secondary battery manufacturing apparatus (1) as claimed in any of the previous claims, wherein the processing part (30) further includes a blower (330) configured to remove foreign matter from the electrode plate (M).

7. The secondary battery manufacturing apparatus (1) as claimed in any of the previous claims, wherein the apparatus (1) is configurable such that the first processing part (31) processes the electrode plate (M), or the second processing part (32) processes the electrode plate (M).

8. The secondary battery manufacturing apparatus (1) as claimed in any of the previous claims, wherein the first processing part (31) and the second processing part (32) are positioned apart from each other on the path of the electrode plate (M).

9. The secondary battery manufacturing apparatus (1) as claimed in any of the previous claims, further comprising a thickness measurement part (40) configured to measure a thickness of a first active material layer (A1) disposed on the first surface and a thickness of a second active material layer (A2) disposed on the second surface.

10. The secondary battery manufacturing apparatus (1) as claimed in claim 9, wherein the thickness measurement part (40) includes a cutting part (41) comprising:
a cutter (412) configured to cut the first active material layer (A1), the electrode plate (M), and the second active material layer (A2); and
a cylinder (414) configured to move the cutter (412).

11. The secondary battery manufacturing apparatus (1) as claimed in any of claims 9 or 10, wherein the thickness measurement part (40) further includes a measurement part (42) configured to measure the thickness of the first active material layer (A1) and the thickness of the second active material layer (A2).

12. The secondary battery manufacturing apparatus (1) as claimed in any of the previous claims, wherein a thickness of a first active material layer (A1) disposed the one surface is different from a thickness of a second active material layer (A2) disposed on the other surface.

13. The secondary battery manufacturing apparatus (1) as claimed in claim 12, wherein the first processing part (31) is configured to process the electrode plate (M) when a thickness of a first active material layer (A1) disposed on the first surface is less than a thickness of a second active material layer (A2) disposed on the second surface, and
wherein the second processing part (32) is configured to process the electrode plate (M) when the thickness of the first active material layer (A1) is greater than the thickness of the second active material layer (A2).

14. The secondary battery manufacturing apparatus (1) as claimed in any of the previous claims, wherein the first processing part (31) or the second processing part (32) is configured to process the electrode plate (M) when a thickness of a first active material layer (A1) disposed on the first surface is the same as a thickness of a second active material layer (A2) disposed on the second surface.

15. A method of manufacturing a secondary battery, wherein the method is preferably performed with a secondary battery manufacturing apparatus (1) configured according to any of the previous claims, the method comprising:
a thickness measurement operation (S200) of measuring a thickness of a first active material layer (A1) disposed on a first surface of an electrode plate (M) and a thickness of a second active material layer (A2) disposed on a second surface of the electrode plate (M);
a thickness comparison operation (S300) of comparing the thickness of the first active material layer (A1) to the thickness of the second active material layer (A2); and
an electrode plate processing operation (S400) of processing the electrode plate (M) by a first processing part (31) disposed at the first surface or processing the electrode plate (M) by a second processing part (32) disposed at the second surface.
